(19) Europäisches Patentamt

European Patent Office

Office européen des brevets

(11) **EP 4 106 179 A1**

(12) **EUROPEAN PATENT APPLICATION**

(43) Date of publication:
**21.12.2022 Bulletin 2022/51**

(51) International Patent Classification (IPC):
**H02P 9/00** *(2006.01)*

(21) Application number: **21382530.0**

(52) Cooperative Patent Classification (CPC):
**H02P 9/007;** H02J 3/16; H02P 9/105

(22) Date of filing: **14.06.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
Innovation &
Technology S.L.
31621 Sarriguren (Navarra) (ES)**

(72) Inventor: **The designation of the inventor has not
yet been filed**

(74) Representative: **SGRE-Association
Siemens Gamesa Renewable
Energy GmbH & Co KG
Schlierseestraße 28
81539 München (DE)**

(54) **GRID FORMING OPERATION WITH A WOUND ROTOR INDUCTION GENERATOR**

(57) A method (800) of operating a power converter (125) is provided. The power converter comprises a rotor side converter (113) configured to be electrically coupled to a rotor (112) of a wound rotor induction generator (110). The method comprises operating the power converter in a grid forming operating mode in which the rotor side converter is operated to control an output voltage $(v_s)$ at a stator of the wound rotor induction generator in accordance with a reference stator voltage $(v^*_s)$. Operating the power converter in the grid forming operating mode comprises deriving, based on the reference stator voltage $(v^*_s)$ for the output stator voltage $(v_s)$, a reference rotor current $(i^*_{r,d}, i^*_{r,q})$ for a rotor current in the rotor and controlling the rotor current $(i_{r,d}, i_{r,q})$ in the rotor in accordance with the reference rotor current $(i^*_{r,d}, i^*_{r,q})$.

FIG 2

**Description**

FIELD OF THE INVENTION

The present invention relates to a method for operating a power converter in a grid forming operating mode. It further relates to a computer program for performing such method and a control system configured to perform such method.

BACKGROUND

The electrical power provided by an electrical power generation system is usually fed into a power grid which is an interconnected network for electricity delivery and distribution. Electrical grids vary in size and can cover whole countries or continents. In order to maintain the stability of a power grid, the generated electrical power has to fulfill stringent grid codes. Due to the increasing variety of renewable energy sources, e.g. wind turbines or solar cells, converters are used to convert the generated electrical power appropriately and to maintain the stability. The converters are designed to perform a grid-feeding/grid-following operation or a grid-forming operation. For the grid-feeding/grid-following operation, a converter behaves as a current source and synchronizes the electrical power output with the dynamics of the power grid. The output of a grid-feeding/grid-following converter is thus current controlled. For the grid-forming operation, a converter is operated as a voltage source, imposes voltage and frequency, and synchronizes directly with the grid. The output of a grid-forming converter is thus voltage controlled. In a grid feeding/gird following scheme a phase locked loop (PLL) is typically used to synchronize the output of a converter with the grid, the synchronization being based on measuring the dynamics of the voltage at the point of common coupling. However, in the case of a weak grid, significant voltage excursions can occur and hence, such measurement cannot be further processed. A critical case of a weak grid situation may for example be if the electrical power generation system is operated in an island mode.

Although grid-forming converters have to be necessarily operated in weak grids, it is challenging to do so in view of the unreliable results of the PLL. A tendency of the prior art towards control technologies for non-synchronous generators can be recognized which mimic the dynamic behavior of synchronous generators to overcome the difficulties associated with the PLL synchronizing technique for voltage-source converters connected to a weak grid. For example, the document of S. Wang, J. Hu, X. Yuan and L. Sun, "On Inertial Dynamics of Virtual-Synchronous-Controlled DFIG-Based Wind Turbines", in IEEE Transactions on Energy Conversion, vol. 30, no. 4, pp. 1691-1702, Dec. 2015, describes a doubly fed induction generator (DFIG) based wind turbine controlled with the concept of virtual synchronization and a method which allows DFIG-based wind turbines to inherently synchronize with the grid. A PLL is not required. The approach however directly controls the voltage output of the generator. Accordingly, the dynamics of the current cannot be restricted in a controlled manner and the compatibility to existing control strategies is no more given.

SUMMARY

Accordingly, there is the need to mitigate at least some of the drawbacks mentioned above and to provide a solution that allows a grid forming operation of a wound rotor induction generator which provides improved control and greater flexibility, in particular better compatibility.

This need is met by the features of the independent claims. The dependent claims describe embodiments of the invention.

According to an aspect, a method of operating a power converter is provided. The power converter may comprise a rotor side converter configured to be electrically coupled to a rotor of a wound rotor induction generator. The method may comprise operating the power converter in a grid forming operating mode in which the rotor side converter is operated to control an output voltage at a stator of the wound rotor induction generator in accordance with a reference stator voltage. Operating the power converter in the grid forming operating mode may further comprise, based on the reference stator voltage for the output stator voltage, deriving a reference rotor current for a rotor current in the rotor and controlling the rotor current in the rotor in accordance with the reference rotor current.

Since controlling the output stator voltage may be based on an inner rotor current control loop, the dynamics of the rotor current is limited in a controlled manner. Additionally, the compatibility with control strategies based on the current control loop is maintained and the signals of the current control loop can be accessed and further processed.

Controlling the rotor current may further comprise monitoring the rotor current to generate a monitored rotor current, generating a reference rotor voltage based on the reference rotor current and the monitored rotor current, and applying the reference rotor voltage to the rotor.

The wound rotor induction generator may be a doubly fed induction generator.

The output stator voltage at the stator windings may be a periodical signal in accordance with a stator frequency and the stator may be coupled to a power grid with a grid frequency, and the grid frequency may then be equal or approximately equal to the stator frequency.

The stator may comprise stator windings for three phases, wherein controlling the output stator voltage may comprise controlling the single-phase output voltage for each of the three phases. The rotor may comprise rotor windings for three phases, wherein controlling the rotor current in the rotor may comprise controlling the rotor current for each of the three phases.

The rotor current may be controlled based on the reference rotor current by means of a current controller and the current controller may preferably be a proportional-integral controller.

In an example, the rotor current may be a three-phase rotor current, wherein the reference rotor current for the three-phase rotor current may be derived in a rotating d-q frame. The rotating d-q frame may rotate with a phase angle and may include a d component of the rotor current and a q component of the rotor current. The rotor current may be controlled by a rotor current controller comprising a respective d component current controller and a respective q component current controller. At least one of the d-axis current controller and the q-axis current controller may preferably be a proportional-integral controller.

Such configuration may provide an efficient control.

In an example, controlling the output stator voltage may comprise controlling an output stator voltage magnitude and/or controlling an output stator voltage phase.

In an example, operating the power converter in the grid forming operating mode may further comprise determining a phase angle of the output stator voltage based on a swing equation in response to a reference torque and a monitored torque or in response to a reference active power and a monitored active power.

Determining the phase angle based on the swing equation allows a stable control, in particular in the case of a weak grid. Applying the swing equation thus also stabilizes the grid.

Controlling the rotor current may further be based on the determined phase angle.

Determining the phase angle may further comprise determining an integrative portion of the phase angle and adding the integrative portion of the phase angle to an initial portion of the phase angle. The phase angle may be an electrical angle of the output stator voltage. The time derivative of the phase angle is an electrical angular velocity and the integrative portion of the phase angle is the integration of the electrical angular velocity over time, from which the initial portion of the phase angle is subtracted.

The method may comprise providing the reference torque and monitoring a torque to generate a monitored torque. The rotor may be coupled to a shaft and the torque may be a net torque applied to the shaft.

The method may comprise providing the reference active power and monitoring an active power to generate the monitored active power. The active power is the electrical active power generated by the wound rotor induction generator and the active power may preferably be the active power output by both the rotor and the stator of the wound rotor induction generator.

In an example, the swing equation may be a second order differential equation, wherein the second order differential equation may model an inertial response. Preferably, the second order differential equation may be represented by an equation $d(d\theta/dt)/dt=1/(2H)(\tau^*-\tau-D(\omega_0-\omega))$ or $d(d\theta/dt)/dt=1/(2H)(P^*-P-D(\omega_0-\omega))$, wherein $\theta$ is the phase angle, H is an inertia coefficient, D is a damping coefficient, $\omega_0$ is a predetermined nominal frequency, $\omega$ is an electrical angular velocity, $\tau^*$ is the reference torque, $\tau$ is the monitored torque, $P^*$ is the reference active power, P is the monitored active power.

The inertial response may be based on a model of a swing of a rotor of a synchronous machine.

Such implementation of the swing equation is robust for control, generates reliable signals and is fast in computation.

The predetermined nominal frequency may be a power grid frequency, and the predetermined nominal frequency may preferably be 50 Hz or 60 Hz.

In an example, the method may further comprise applying a reference frame transformation based on the determined phase angle, wherein preferably, applying the reference frame transformation may comprise at least one of transforming from the dq-frame into the abc-frame and transforming from the abc-frame into the dq-frame.

A transformation based on the determined phase angle allows a stable control, in particular in the case of a weak grid.

Applying the reference frame transformation may comprise at least one of applying the reference frame transformation to the stator current, the rotor current, the stator voltage, the rotor voltage, the stator flux and the rotor flux. The stator current, the rotor current, the stator voltage, the rotor voltage, the stator flux and the rotor flux may be an actual signal or a reference signal, wherein the actual signal may be generated by monitoring.

The method may further comprise deriving from the reference rotor current a reference rotor voltage and transforming the reference rotor voltage using said reference frame transformation. The reference rotor voltage may then be applied to the rotor windings to achieve the desired rotor current in the rotor windings. Pulse-width modulation (PWM) may for example be employed for this purpose, i.e. for synthesizing the rotor voltage to be applied.

Operating the power converter in the grid forming operating mode may comprise operating the rotor side converter using a virtual synchronous machine control scheme. In particular, the virtual synchronous machine control scheme may implement the swing equation.

In an example, deriving the reference rotor current rom the reference stator voltage may comprise monitoring a stator current in stator windings of the stator to generate a monitored stator current, deriving a reference flux from the reference stator voltage, and generating the reference rotor current based on the reference flux and the monitored stator current.

Such deriving of the reference rotor current is efficient.

The reference flux may be a reference stator flux and, alternatively the reference flux may be a reference rotor flux.

In an example, the reference flux may be a reference stator flux and the reference rotor current may be generated from the reference stator flux by means of a stator flux rotor current equation set. The stator flux rotor current equation set may preferably comprise $i^*_{r,d}=(\Psi^*_{s,d} - L_s i_{s,d})/L_m$ and $i^*_{r,q}= (\Psi^*_{s,q} - L_s i_{s,q})/L_m$ wherein $i^*_{r,d}$ is the reference rotor current in d axis, $i^*_{r,q}$ is the reference rotor current in q axis, $\Psi^*_{s,d}$ is the reference stator flux in d axis, $\Psi^*_{s,q}$ is the reference stator flux in q axis, $i_{s,d}$ is the monitored stator current in d axis, $i_{s,q}$ is the monitored stator current in q axis, $L_m$ is a magnetizing inductance and $L_s$ is a stator inductance.

In an alternative example, the reference flux may be a reference rotor flux and the reference rotor current may be generated from the reference rotor flux by means of a rotor flux rotor current equation set. The rotor flux rotor current equation set may preferably comprise $i^*_{r,d}= (\Psi^*_{r,d} - L_m i_{s,d})/L_r$ and $i^*_{r,q}= (\Psi^*_{r,q} - L_m i_{s,q})/L_r$, wherein $i^*_{r,d}$ is the reference rotor current in d axis, $i^*_{r,q}$ is the reference rotor current in q axis, $\Psi^*_{r,d}$ is the reference rotor flux in d axis, $\Psi^*_{r,q}$ is the reference rotor flux in q axis, $i_{s,d}$ is the monitored stator current in d axis, $i_{s,q}$ is the monitored stator current in q axis, $L_m$ is the magnetizing inductance and $L_r$ is a rotor inductance.

Generating the reference flux based on the reference flux rotor current equation set or based on the reference flux stator current equation set allows a fast computation of the reference flux.

The stator current may be a three-phase stator current, wherein the three-phase stator current may be represented in a d-q frame by a d component in the d-axis of the stator current and a q component in the q-axis of the stator current.

In an example, the reference flux may be a reference stator flux and deriving the reference flux may comprise providing a reference reactive power, monitoring a reactive power to generate a monitored reactive power and generating the reference stator flux by a reactive power controller based on the reference reactive power and the monitored reactive power.

Since the reactive power controller is implemented the stability of the control is further improved.

Preferably, deriving the reference flux may further comprise generating a virtual flux by the reactive power controller and more preferably, based on the generated virtual flux, deriving the reference flux may be based on a virtual impedance. In particular, deriving the reference flux based on the virtual impedance may further comprise monitoring a generator output current to generate a monitored generator output current and processing the monitored generator output current by the virtual impedance.

The virtual impedance may comprise a modification of the flux of the generator such to avoid a sideband oscillation in a stiff and series compensated grid. Preferably the flux of the generator is the stator flux and more preferably the modification of the flux comprises the modification of the reference stator flux.

The reactive power controller may be a proportional-integral controller.

The reactive power may be the electrical reactive power generated by the wound rotor induction generator and the reactive power may preferably be the reactive power output by both the rotor and the stator of the wound rotor induction generator.

The reactive power controller may be cascaded by a voltage control and providing the reference reactive power may further comprise providing the reference stator voltage, monitoring the output stator voltage to generate a monitored stator voltage and generating the reference reactive power by a voltage controller based on the reference stator voltage and the monitored stator voltage.

The voltage controller may be a proportional controller.

In an example, the reference stator flux in q axis may be set to zero.

In an example, the reference flux may a reference rotor flux and providing the reference flux may comprise providing a reference equivalent synchronous generator voltage and generating the reference rotor flux based on the reference equivalent synchronous generator voltage. Preferably, generating the reference rotor flux may be based on an equation $\Psi^*_{r,d} =E^*_{eq}/(\omega_g(L_m/L_r))$, wherein $\Psi^*_{r,d}$ is the reference rotor flux in d axis, $E^*_{eq}$ is the reference equivalent synchronous generator voltage, $\omega_g$ is a grid frequency, $L_m$ is the magnetizing inductance, and $L_r$ is the rotor inductance.

In an example, providing the reference equivalent synchronous generator voltage may further comprise providing the reference stator voltage, generating the reference equivalent synchronous generator voltage based on the reference stator voltage. Preferably, generating the reference equivalent synchronous generator voltage may be based on an equation $E^*_{eq} =v^*_s-(R_s+jw_g(L_s-L_m^2/L_r))$, wherein $E^*_{eq}$ is the reference equivalent synchronous generator voltage,

$\omega_g$ is the grid frequency, $L_m$ is the magnetizing inductance, $L_s$ is the stator inductance, $L_r$ is the rotor inductance and $v^*_s$ is the reference stator voltage and j is the imaginary unit.

Such direct computation of the reference flux allows a faster or more efficient control.

The method may further comprise estimating the grid frequency based on the swing equation.

The reference equivalent synchronous generator voltage may represent a voltage deviation between an equivalent circuit of a synchronous generator and an equivalent circuit of a wound rotor induction generator.

In an example, the reference rotor flux in q axis may be set to zero.

The rotor windings may be electrically coupled to the rotor side converter comprised by a power converter and the method may further comprise providing the reference rotor voltage to the power converter, and applying by means of the rotor side converter the rotor voltage to the rotor windings in accordance with the reference rotor voltage

Applying the rotor voltage by the power converter may be based on a pulse-width modulation.

In a further aspect, a control system for controlling the operation of a power converter comprising a rotor side converter configured to be electrically coupled to a rotor of a wound rotor induction generator is provided. The control system may be configured to operate the power converter in a grid forming operating mode in which the rotor side converter may be operated to control an output stator voltage at a stator of the wound rotor induction generator in accordance with a reference stator voltage. The control system may be configured to perform any of the methods described herein.

The control system may for example include a processing unit and a memory, the memory storing control instructions which when executed by the processing unit of the control system cause the control system to perform any of the methods described herein. The Processing unit may for example include a digital signal processor, an application specific integrated circuit, a field programmable gate array, a microprocessor or the like. The memory may include RAM, ROM, Flash Memory, a hard disk drive and the like.

In a further aspect, a power generation system is provided. The power generation system may comprise a wound rotor induction generator comprising a rotor and a stator, wherein the stator is configured to be electrically coupled to a power grid, a power converter comprising a rotor side converter that is electrically coupled to the rotor of the wound rotor induction generator, and a control system having any of the configurations described herein. The control system may be coupled to the power converter to control the operation of the power converter.

The power generation system may further include a grid side converter that may be coupled to the rotor side converter, e.g. via a DC-link, wherein the control system may be configured to operate the grid side converter in a power grid following operation. Preferably, the power grid following operation may include vector control or inertia synchronization control.

Such implementation of the grid side converter allows a higher compatibility with existing control techniques. The grid side converter may control the DC-link voltage and implement a vector control or an inertia synchronization control. Since the vector control or inertia synchronization control is also usually used for grid following operations, such configuration allows a smooth transition if the power generation system is capable to be switched between a grid forming operation mode and a grid following operation mode.

The grid forming power generation system may further be operated in an island mode.

The power generation system may be a power generation system of a wind turbine.

In an example, a wind turbine may be provided. The wind turbine may comprise comprises a power generation system having any of the configurations described herein.

In a further aspect, a computer program for controlling the operation of a power converter comprising a rotor side converter configured to be electrically coupled to a rotor of a wound rotor induction generator is provided. The computer program may comprise control instructions which, when executed by a processing unit of a control system controlling the operation of the power converter, may cause the processing unit to perform any of the methods described herein. The computer program may be provided on a volatile or non-volatile storage medium or data carrier.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

BRIEF DESCRIPTION OF THE DRAWINGS

The foregoing and other features and advantages of the invention will become further apparent from the following detailed description read in conjunction with the accompanying drawings. In the drawings, like reference numerals refer to like elements.

Fig. 1 is a schematic drawing illustrating a power generation system according to an example.

Fig. 2 is a schematic drawing showing a control system and a signal flow illustrating a grid forming operation according to an example.

Fig. 3 is a schematic signal flow chart illustrating the timing controller of the grid forming operation control scheme according to an example.

Fig. 4 is a schematic signal flow chart of the reference flux generation unit and the reference rotor current generation unit of the grid forming operation control scheme according to an example.

Fig. 5 is a schematic signal flow chart illustrating the reference flux generation unit and the reference rotor current generation unit of the grid forming operation control scheme according to an example.

Fig. 6 is a schematic drawing illustrating an equivalent circuit of a doubly fed induction generator according to an example.

Fig. 7 is a schematic drawing illustrating an equivalent circuit of a synchronous generator according to an example.

Fig. 8 is a schematic flow diagram illustrating a method for operating a power converter according to an example.

Fig. 9 is a schematic signal flow chart illustrating the reference flux generation unit and the reference rotor current generation unit of the grid forming operation control scheme according to an example.

DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

The (reference) stator voltage $v^*_s$, $v_s$ may herein also be referred to as (reference) output voltage. Further, it should be clear that in general a monitored signal is generated by monitoring an actual or real signal and thus, the monitored signal is assumed to be equal or approximately equal to the actual or real signal. Thus, a signal referred herein to as actual signal may also be interpreted as monitored signal which is generated by monitoring the actual signal. More specifically, monitoring may for example be performed - but is not limited to - by at least one of a sensor, a sensoring system and a model or a filter based monitoring system, which may for example be a state observer or Kalman filter. Monitoring may further comprise pre- and post-processing, e.g. filtering. It should be further clear that the controllers and respective control loops and underlying subsystems described herein are tuned such that a signal to be controlled stably follows the respective reference signal with a predefined dynamic.

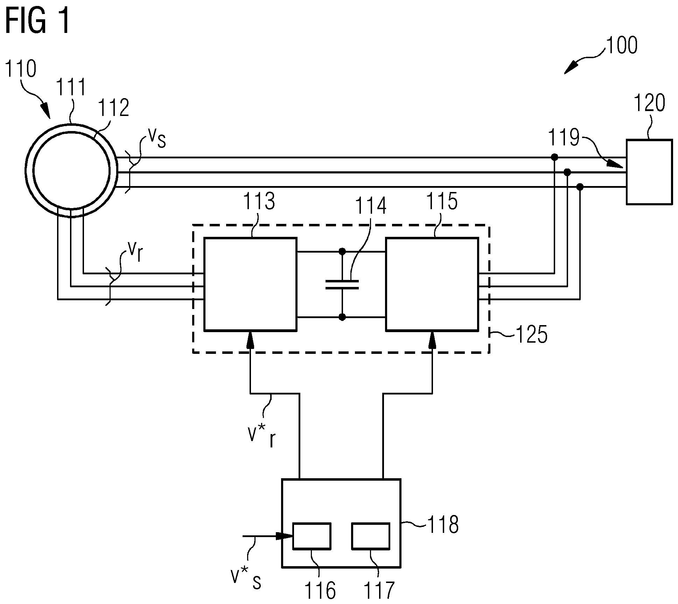

Figure 1 is a schematic drawing illustrating a power generation system 100 according to an example. A wound rotor induction generator 110 which may be a doubly fed induction generator comprises a stator 111 with stator windings and a rotor 112 with rotor windings. The stator 111 may be electrically coupled to a power grid 120 at a point of common coupling 119 and to a grid side converter 115 of the power converter 125. The frequency of the power grid 120 may be characterized by a nominal or rated frequency $\omega_0$ which is for example 50 Hz or 60 Hz and an actual monitored grid frequency $\omega_g$. The stator 111 outputs a stator voltage $v_s$. The electrical power output by the wound rotor induction generator 110 may be a polyphase power, preferably a three-phase power. Both the rotor 112 and the stator 111 preferably comprise three phases. A grid side converter 115 may be electrically coupled via a DC-link 114 with a rotor side converter 113 and the rotor side converter 113 may be electrically coupled with the rotor 112. The converters 113, 115 and the DC-link 114 may be comprised by a power converter 125. The power converter 125 may be capable of bidirectionally transfer of electrical power from the rotor side to the grid side and from the grid side to the rotor side, and may further be capable of imposing a rotor current and/or rotor voltage on each phase of the rotor, the rotor current and/or voltage in each phase preferably being defined by a respective current and/or voltage magnitude and phase angle. For example, the power converter 125 may impose a sinusoidal signal on each phase by making use of pulse-width modulation. An example for such power converter 125 may be a frequency changer and in particular an AC/DC-DC/AC converter.

The operation thereof may be controlled by a control system 118. The control system 118 may comprise a memory 117 and a processing unit 116. Processing unit 116 may for example include a digital signal processor, an application specific integrated circuit, a field programmable gate array, a microprocessor or the like. Memory 117 may include RAM, ROM, Flash Memory, a hard disk drive and the like. The rotor side converter 113 operates in grid forming operating mode as an actuator or final control element and applies an actual rotor voltage $v_r$ to the rotor 112 in accordance with a reference rotor voltage $v^*_r$. The reference rotor voltage $v^*_r$ may be derived by the control unit 118 in response to a provided reference stator voltage $v^*_s$. It should be clear that a plurality of signals may be provided from the control unit 118 to the converter 113 and that the reference rotor voltage $v^*_r$ may be comprised by such a plurality of signals. The actual rotor voltage $v_r$ applied to the rotor 112 results in an actual stator voltage $v_s$ output at the stator 111 in accordance with the reference stator voltage $v^*_s$. Controlling the rotor side converter 113 may be based on a virtual synchronous mode (VSM) that includes inner current control loops, preferably the inner rotor current control loops, and controlling the grid side converter may be based on vector control or inertia synchronization control. The latter two are as such known control schemes and will thus not be described in greater detail here. In the virtual synchronous mode a swing of a rotor of a synchronous machine may be simulated an the wound rotor induction generator may be operated such that its inertial response corresponds to that of the synchronous machine.

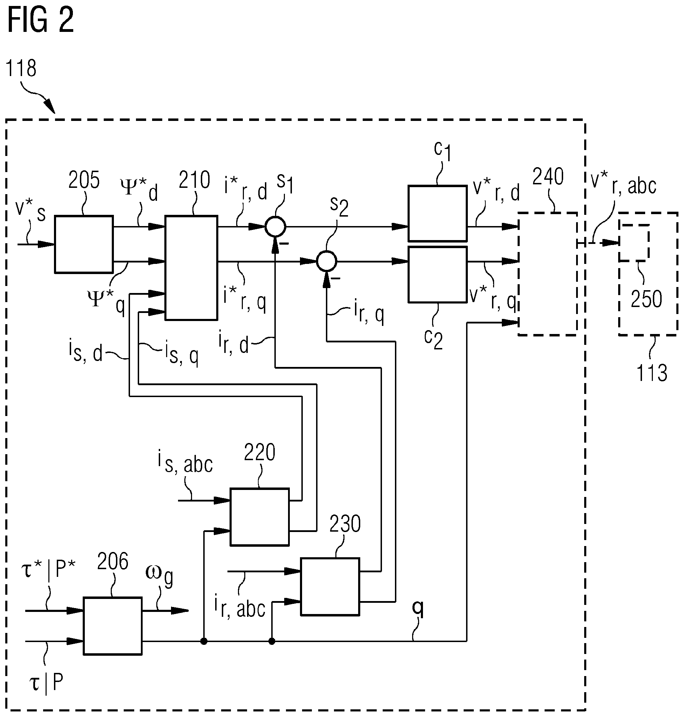

Figure 2 is a schematic drawing showing an example of the control system 118 and illustrating the signal flow for a grid forming operation control scheme that may be performed by the power generation system shown in figure 1. More specifically, the grid forming operation control scheme may be performed by the processing unit 116 and may derive, as shown in figure 1, in response to an reference stator voltage $v^*_s$ the three-phase reference rotor voltage $v^*_r$ which is represented by a reference rotor voltage in d axis $v^*_{r,d}$ and a reference rotor voltage in q axis $v^*_{r,q}$. The reference rotor voltage $v^*_{r,d}$, $v^*_{r,q}$ in d and q axis may then be transformed into a corresponding reference rotor voltage in a, b, c axes $v^*_{a,b,c}$ by a transformation unit 240, e.g. by applying a Park transformation from d-q frame into the a-b-c frame. The reference rotor voltage $v^*_{r,d}$, $v^*_{r,q}$ may hence be transformed with the generated electrical angle $\theta$. The corresponding reference rotor voltage in a, b, c axes $v^*_{a,b,c}$ may then be provided to a pulse-width modulation unit 250 of the rotor side converter 113, which performs pulse width modulation and generates respective control signals that control the semiconductor switches of the rotor side converter 113 to cause the rotor side converter 113 to generate the desired rotor voltage at the rotor windings. The pulse-width modulation unit 250 may also be an external unit coupled to the rotor side converter 113.

The reference rotor voltage in d axis $v^*_{r,d}$ and q axis $v^*_{r,q}$ may be generated by a respective controller $c_1$, which may for example be a proportional integral controller, and by a respective controller $c_2$, which may for example be a proportional integral controller. The input of controller $c_1$ may be a d axis rotor current control error of a reference rotor current in d axis $i^*_{r,d}$ and an actual rotor current in d axis $i_{r,d}$, the difference of which is generated at summation point $s_1$. The input of controller $c_2$ may be a q axis rotor current control error of a reference rotor current in q axis $i^*_{r,q}$ and an actual rotor current in q axis $i_{r,q}$, the difference of which is generated at summation point $s_2$. The actual rotor current $i_{r,d}$, $i_{r,q}$ may be generated by monitoring an actual rotor current in a, b, c axes $i_{r,abc}$ and transforming, by a transforming unit 230, the actual rotor current in a, b, c axes $i_{r,abc}$ from the a-b-c frame into the d-q frame, e.g. by applying a Park transformation. Correspondingly, an actual stator current $i_{s,d}$, $i_{s,q}$ may be generated by monitoring an actual stator current in a, b, c axes $i_{s,abc}$ and transforming, by transforming unit 220, the actual stator current in a, b, c axes $i_{s,abc}$ from the a-b-c frame into the d-q frame, e.g. by applying a Park transformation. Transforming by transforming unit 220, 230, 240, may be based on an electrical angle $\theta$ which may be generated by a timing controller 206. The timing controller 206 derives the electrical angle for the phase of the rotor voltage based on a swing equation. The timing controller 206 may further generate a grid frequency $\omega_g$ based on the swing equation. The grid frequency may be an estimation or approximation of the actual frequency of the power grid to which the wound rotor induction generator may be coupled. It should be clear that a grid coupled generator may be operated with a stator frequency $\omega_s$ equal to the grid frequency $\omega_g$ and that ideally the grid frequency $\omega_g$ is equal to the nominal frequency. This is however usually not the case for a weak power grid or in case of a power imbalance.

A reference torque $\tau^*$ and an actual torque $\tau$ or a reference active power $P^*$ and actual active power $P$ may be provided to the swing equation. Both the reference active power $P^*$ and the reference torque $\tau^*$ may be a result generated within a cascaded speed control. The active power $P^*$, $P$ may be the electrical active power generated by the wound rotor induction generator and may preferably be the active power output by both the rotor and the stator of the wound rotor induction generator. The torque $\tau^*$, $\tau$ may be a net torque applied to the shaft to which the rotor may be coupled.

The reference rotor current $i^*_{r,d}$, $i^*_{r,q}$ may be derived by reference rotor current generation unit 210 based on a reference flux in d axis $\Psi^*_d$ and a reference flux in q axis $\Psi^*_q$, the stator current in d axis $i_{s,d}$ and the stator current in q axis $i_{s,q}$. The reference flux $\Psi^*_d$, $\Psi^*_q$ may be a reference rotor flux or alternatively a reference stator flux. The reference flux $\Psi^*_d$, $\Psi^*_q$ may be derived by a reference flux generation unit 205 which may take a reference stator voltage $v^*_s$ as input. The reference flux generation unit 205 may additionally take an actual stator voltage as input. The reference stator voltage $v^*_s$ may be a complex number and may thus comprise a real part and an imaginary part. The complex number represents the reference magnitude and phase angle of the reference stator voltage $v^*_s$. It may also be possible that the reference stator voltage $v^*_s$ is a reference stator voltage magnitude, combined particularly with a respective phase angle. It should be clear that the swing equation is preferably used when a weak grid is apparent. However, in particular if a weak grid is not apparent, the electrical angle θ and the grid frequency $\omega_g$ may also be determined by a PLL or other well-known alternatives.

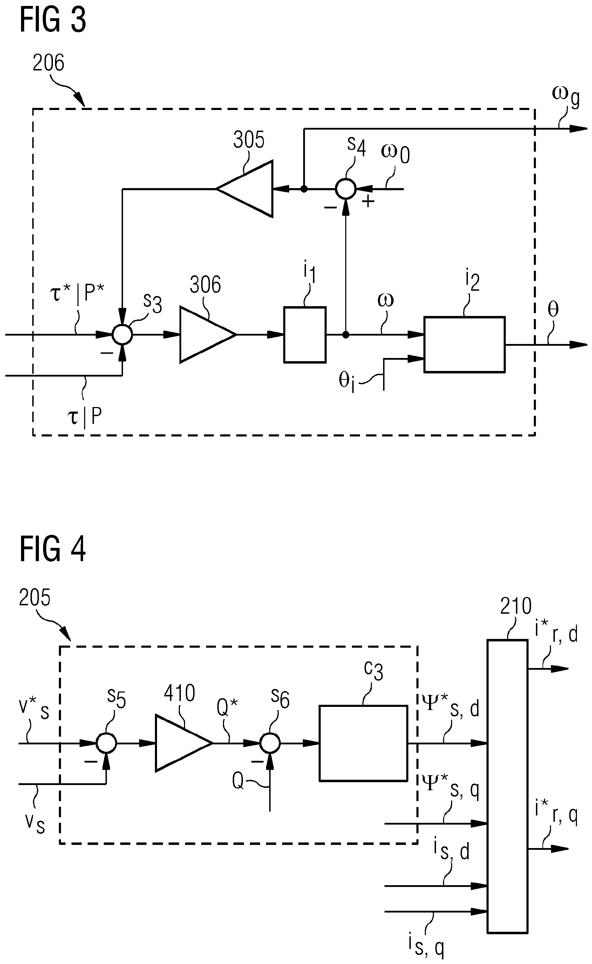

Figure 3 is a schematic signal flow chart illustrating an example of the timing controller 206, which is based on the swing equation, of the grid forming operation control scheme as shown in figure 2 according to an exemplary implementation. The swing equation may derive the electrical angle θ and the grid frequency $\omega_g$ based on the reference torque $\tau^*$ and the actual torque $\tau$ or the reference active power $P^*$ and the actual active power $P$. The swing equation may model an inertial response, e.g. the inertial response according to a simulation of a swing of a rotor of a synchronous generator. Preferably, the second order differential equation is represented by the equation

$$d(d\theta/dt)/dt=1/(2H)(\tau^*-\tau-D(\omega_0-\omega)) \qquad eq. \ 1,$$

or

$$d(d\theta/dt)/dt=1/(2H)(P^*-P-D(\omega_0-\omega)) \qquad eq. \ 2,$$

wherein θ is the phase angle, $H$ is an inertia coefficient, $D$ is a damping coefficient, $\omega_0$ is the nominal frequency, $\omega$ is an electrical angular velocity, $\tau^*$ is the reference torque, $\tau$ is the actual torque, $P^*$ is the reference active power, $P$ is the actual active power. It may also be possible to use a monitored signal of the grid frequency instead of the nominal grid frequency $\omega_0$. According to eq. 1 or 2, a torque control error or an active power control error may be generated based on the torque input or the active power input at summation point $s_3$, each control error derived by subtracting the respective actual signal from the respective reference signal. Further, at summation point $s_3$ a damping portion output by gain 305 may be added to the torque or active power control error. The gain 305 may be constituted by damping coefficient $D$. The result at summation point $s_3$ may be directed via gain 306 which may be constituted by the inertia coefficient $H$ - more specifically by the term $2H$ - and may be integrated by integrator $i_1$ to generate the electrical angular velocity $\omega$. The electrical angular velocity $\omega$ may be subtracted from the nominal frequency $\omega_0$ at summation point $s_4$. The result output at summation point $s_4$ is the estimation or approximation of the grid frequency $\omega_g$. The grid frequency $\omega_g$ is further fed back via gain 305 as described above. Furthermore, the electrical angular velocity $\omega$ may be integrated by integrator $i_2$ and the integrating may be based additionally on an initial electrical angle $\theta_i$. The initial electrical angle $\theta_i$ may for example be determined based on the equation $\theta_i$-$\omega_0 t$, wherein t is the time, or based on monitoring, e.g. by a sensor. The output of the integrator $i_2$ is the electrical angle θ.

Figure 4 is a schematic signal flow chart illustrating an implementation of the reference flux generation unit 205 and the reference rotor current generation unit 210 of the grid forming operation control scheme as shown in figure 2 according to an example. The reference flux $\Psi^*_d$, $\Psi^*_q$ may be a reference stator flux $\omega^*_{s,d}$, $\Psi^*_{s,q}$. The reference stator flux $\Psi^*_{s,d}$, $\Psi^*_{s,q}$ may be represented as a reference stator flux in d axis $\Psi^*_{s,d}$ and a reference stator flux in q axis $\Psi^*_{s,q}$. The reference stator flux in d axis $\Psi^*_{s,d}$ may be derived based on the reference stator voltage $v^*_s$ and the actual stator voltage $v_s$. The reference stator flux in q axis $\Psi^*_{s,q}$ may be set to a constant value, e.g. to zero. A stator voltage control error may be generated at summation point $s_5$ by subtracting the actual stator voltage $v_s$ from the reference stator voltage $v^*_s$. The stator voltage control error may be directed via a gain 410 to generate a reference reactive power $Q^*$. The gain 410 may thus be a proportional controller. An actual reactive power $Q$ is subtracted from the reference reactive power $Q^*$ at summation point $s_6$ to generate a reactive power control error. The reactive power control error may be directed via controller $c_3$ and controller $c_3$ may generate the reference stator flux in d axis $\Psi^*_{s,d}$.

The reference rotor current generation unit 210 may further process the reference stator flux $\Psi^*_{s,d}$, $\Psi^*_{s,q}$ and may generate the reference rotor current $i^*_{r,d}$, $i^*_{r,q}$ by means of a stator flux rotor current equation set, wherein the stator flux rotor current equation set preferably comprises

$$i^*_{r,d}=(\Psi^*_{s,d} - L_s i_{s,d})/L_m \qquad eq. \ 3$$

and

$$i^*_{r,q}=(\Psi^*_{s,q} - L_s i_{s,q})/L_m \qquad eq. \ 4$$

wherein $i^*_{r,d}$ is the reference rotor current in d axis, $i^*_{r,q}$ is the reference rotor current in q axis, $\Psi^*_{s,d}$ is the reference stator flux in d axis, $\Psi^*_{s,q}$ is the reference stator flux in q axis, $i_{s,d}$ is the actual stator current in d axis, $i_{s,q}$ is the actual stator current in q axis, $L_m$ is the magnetizing inductance and $L_s$ is the stator inductance. Furthermore, the reference stator flux in q axis may be set to zero: $\Psi^*_{s,q}=0$ (eq. 5).

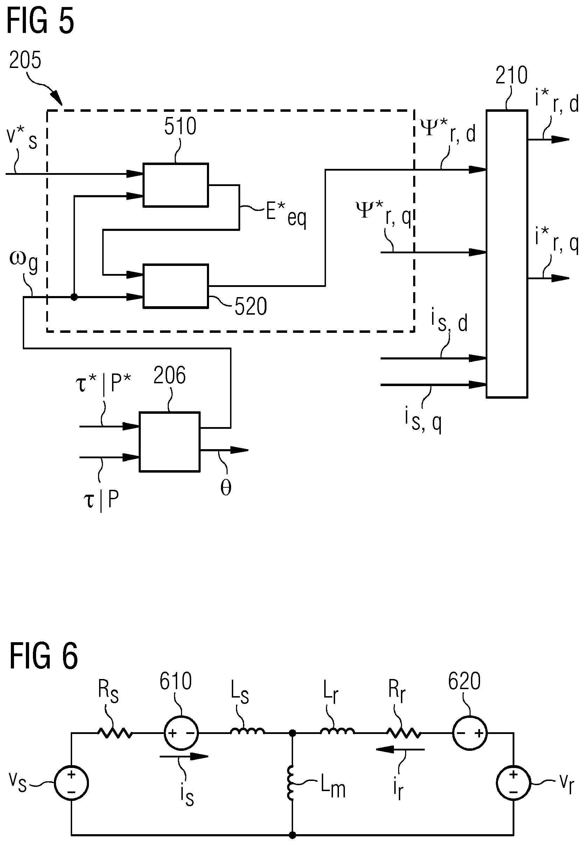

Figure 5 is a schematic signal flow chart illustrating an implementation of the reference flux generation unit 205 and the reference rotor current generation unit 210 of the grid forming operation control scheme as shown in figure 2 according to an example. The reference flux $\Psi^*_d$, $\Psi^*_q$ may be a reference rotor flux $\Psi^*_{r,d}$, $\Psi^*_{r,q}$. The reference rotor flux $\Psi^*_{r,d}$, $\Psi^*_{r,q}$ may be represented as a reference rotor flux in d axis $\Psi^*_{r,d}$ and a reference rotor flux in q axis $\Psi^*_{r,q}$. The reference rotor flux in d axis $\Psi^*_{r,d}$ may be derived based on the reference stator voltage $v^*_s$ and the estimated or approximated grid frequency $\omega_g$. The grid frequency $\omega_g$ is generated by the swing equation as outlined above. The reference stator flux in q axis $\Psi^*_{r,q}$ may be set to a constant value, e.g. to zero. The reference rotor flux in d axis $\Psi^*_{r,d}$ may be derived by flux component generation unit 520 based on the grid frequency $\omega_g$, a reference equivalent synchronous generator voltage $E^*_{eq}$, and an equation

$$\Psi^*_{r,d} = E^*_{eq}/(\omega_g (L_m/L_r)), \quad \text{eq. 6,}$$

wherein $\Psi^*_{r,d}$ is the reference rotor flux in d axis, $E^*_{eq}$ is the reference equivalent synchronous generator voltage, $\omega_g$ is the grid frequency, $L_m$ is the magnetizing inductance, and $L_r$ is the rotor inductance. The reference equivalent synchronous generator voltage $E^*_{eq}$ may further be derived by reference equivalent voltage generation unit 510 based on the grid frequency $\omega_g$, the reference stator voltage $v^*_s$ and an equation $E^*_{eq} = v^*_s - (R_s + jw_g(L_s - L_m^2/L_r))$, eq. 7, wherein $E^*_{eq}$ is the reference equivalent synchronous generator voltage, $\omega_g$ is the grid frequency, $L_m$ is the magnetizing inductance, $L_s$ is the stator inductance, $L_r$ is the rotor inductance and $v^*_s$ is the reference stator voltage and j is the imaginary unit.

The reference rotor current generation unit 210 may further process the reference rotor flux $\omega^*_{r,d}$, $\Psi^*_{r,q}$ and may generate the reference rotor current $i^*_{r,d}$, $i^*_{r,q}$ by means of a rotor flux rotor current equation set, wherein the rotor flux rotor current equation set preferably comprises

$$i^*_{r,d} = (\Psi^*_{r,d} - L_m i_{s,d})/L_r \qquad \text{eq. 8,}$$

and

$$i^*_{r,q} = (\Psi^*_{r,q} - L_m i_{s,q})/L_r \qquad \text{eq. 9,}$$

wherein $i^*_{r,d}$ is the reference rotor current in d axis, $i^*_{r,q}$ is the reference rotor current in q axis, $\Psi^*_{r,d}$ is the reference rotor flux in d axis, $\Psi^*_{r,q}$ is the reference rotor flux in q axis, $i_{s,d}$ is the actual stator current in d axis, $i_{s,q}$ is the actual stator current in q axis, $L_m$ is the magnetizing inductance and $L_r$ is the rotor inductance. Furthermore, the reference rotor flux in q axis may be set to zero: $\Psi^*_{r,q}=0$ (eq. 10).

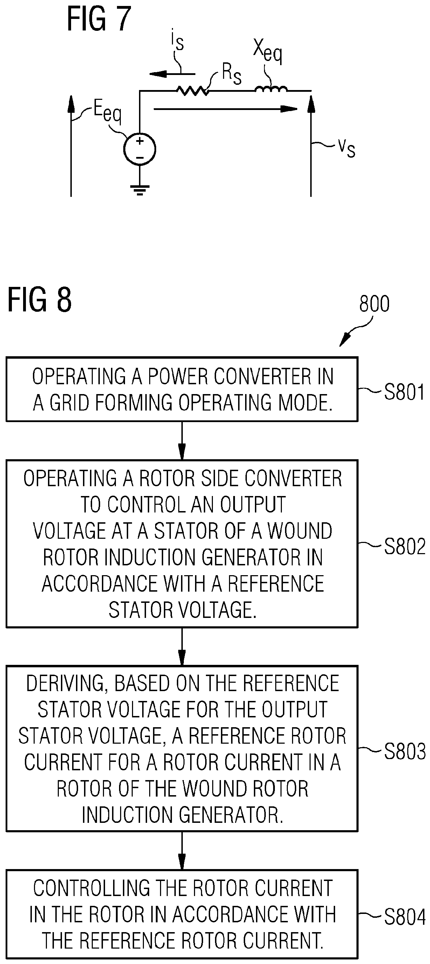

Figure 6 is a schematic drawing illustrating an equivalent circuit of a wound rotor induction generator, e.g. a doubly fed induction generator and figure 7 is a schematic drawing illustrating an equivalent circuit of a synchronous generator. Based on both equivalent circuits, the equations eq. 3 - eq. 10 may be derived. In the following, the derivation is briefly indicated.

Figure 6 shows the equivalent circuit of a wound rotor induction generator comprising the stator voltage $v_s$, the stator resistance $R_s$, a virtual voltage source 610 which may be characterized by $j\omega_s\Psi_s$, wherein $\omega_s$ is the stator frequency, $\Psi_s$ is the stator flux and j is the imaginary unit, the stator inductance $L_s$, the magnetizing inductance $L_m$, the rotor inductance $L_r$ the rotor resistance $R_r$, a virtual voltage source 620 which may be characterized by $j(\omega_s-\omega_r)\Psi_r$, wherein $\omega_s$ is the stator frequency, $\omega_r$ is the rotor frequency, $\omega_r$ is the rotor flux and j is the imaginary unit, and the rotor voltage $v_r$. Further, the stator current $i_s$ and the rotor current $i_r$ are indicated.

The stator flux $\Psi_s$ may be given by an equation $\Psi_s=L_s i_s+L_m i_r$ and the rotor flux $\Psi_s$ may be given by an equation $\Psi_r=L_r i_r+L_m i_s$. It may be said that $v_s=R_s i_s+d(\Psi_s)/dt+j\omega_s\Psi_s$, wherein $d(\Psi_s)/dt$ is the time derivative of $\Psi_s$, and $v_r=R_r i_r+d(\Psi_r)/dt+j(\omega_s-\omega_r)\Psi_r$, wherein $d(\Psi_r)/dt$ is the time derivative of $\Psi_r$. For the operational point it may be given $v_{s,d}+jv_{s,q}=R_s(i_{s,d}+ji_{s,q})+j\omega_s(\Psi_{s,d}+\Psi_{s,q})$ and it follows $\Psi_{s,q}=-(v_{s,d}-R_s i_{s,d})/\omega_s$ and $\Psi_{s,d}=(v_{s,q}-R_s i_{s,q})/\omega_s$, wherein the d index and the q index indicate the signal being referred to the d axis and q axis. The stator voltage $v_s$ may then be given by

$$v_s=(R_s+j\omega_s(L_s-L_m^2/L_r))i_s+j\omega_s L_m/L_r\Psi_r \quad (\text{eq. 11}).$$

Figure 7 shows the equivalent circuit of a synchronous generator comprising the stator voltage $v_s$, the stator

resistance $R_s$, an equivalent reactance $X_{eq}$, and the reference equivalent synchronous generator voltage $E_{eq}$. Further, the stator current $i_s$ is indicated. The stator voltage $v_s$ may be given by the equation $v_s=(R_s+jX_{eq})i_s+E_{eq}$ (eq. 12) .

By comparing based equivalent circuits based on equations 11 and 12 the reference equivalent synchronous generator voltage $E_{eq}$ may be given by $E_{eq}=j\omega_sL_m/L_r\Psi_r$ and $X_{eq}$ may be given by $X_{eq}= j\omega_s(L_s-L_m^2/L_r)$.

Figure 8 shows a schematic flow diagram illustrating a method 800 for operating a power converter as for example the power converter 125 shown in figure 1. The power converter comprises a rotor side converter configured to be electrically coupled to a rotor of a wound rotor induction generator. The sequence of the method steps in figure 1 is not limited to the shown sequence. The method 800 of operating the power converter comprises in a first step S801 operating the power converter in a grid forming operating mode in which the rotor side converter is operated to control (S802) an output voltage at a stator of the wound rotor induction generator in accordance with a reference stator voltage. Operating the power converter in the grid forming operating mode comprises in step S803 deriving, based on the reference stator voltage for the output stator voltage, a reference rotor current for a rotor current in the rotor and in step S804 controlling the rotor current in the rotor in accordance with the reference rotor current.

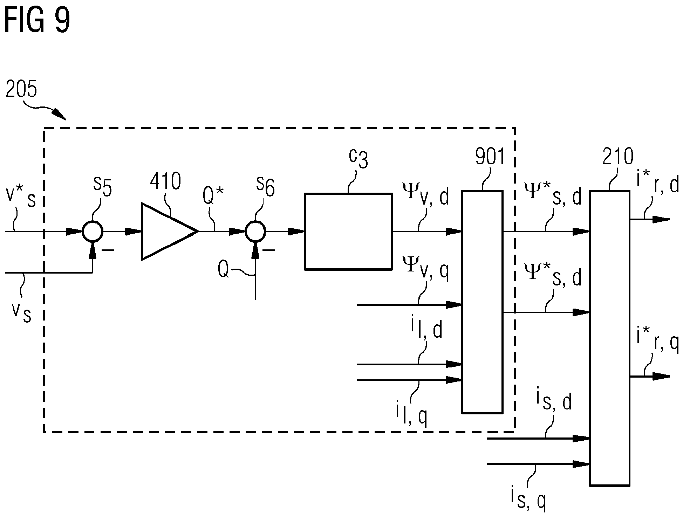

Figure 9 is a schematic signal flow chart illustrating an implementation of the reference flux generation unit 205 and the reference rotor current generation unit 210 of the grid forming operation control scheme as shown in figure 2 according to an example. Referring to figure 4 the exemplary implementation of the reference flux generation unit 205 may be extended optionally by the virtual impedance unit 901. The virtual impedance unit 901 may be connected to the controller $c_3$ and to the reference rotor current generation unit 210. The controller $c_3$ may generate in such case a virtual flux in d axis $\Psi_{v,d}$ based on the difference of the reference reactive power and the actual reactive power at summation point $s_6$. The virtual impedance unit 901 may generate the reference flux in d axis $\Psi^*_{s,d}$ and the reference flux in q axis $\Psi^*_{s,q}$ based on the equations $\Psi^*_{s,d}=i_{l,d}-L_v\Psi_{v,d}$ and $\omega^*_{s,q}=i_{l,q}-L_v\Psi_{v,q}$, wherein $\Psi_{v,d}$ is the virtual flux in d axis, $\Psi_{v,q}$ is a virtual flux in q axis, $i_{l,d}$ is an generator output current in d axis, $i_{l,q}$ is an generator output current in q axis and $L_v$ is a virtual inductance. At least one of the virtual flux in q axis $\Psi_{v,q}$, the generator output current in d axis $i_{l,d}$ and the generator output current in q axis $i_{l,q}$ may be provided, in particular at least one may be an provided actual signal, e.g. provided by monitoring. The generator output current $i_{l,d}$, $i_{l,q}$ may be the output current of the wound rotor induction generator 110 outgoing from the system. The wound rotor induction generator 110 is shown in figure 1. Such implementation may allow to apply a virtual impedance through the virtual flux $\Psi_{v,d}$, $\Psi_{v,q}$ of the VSM which may modify the stator flux references $\Psi^*_{s,d}$, $\Psi^*_{s,q}$. This may be equivalent to adding an inductor between the stator and the point of common coupling. Grid-forming converters tend to suffer from sideband oscillations in stiff and series compensated grids which may be avoided by using the virtual impedance.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

**Claims**

1. A method (800) of operating a power converter (125), wherein the power converter comprises a rotor side converter (113) configured to be electrically coupled to a rotor (112) of a wound rotor induction generator (110), wherein the method comprises operating the power converter in a grid forming operating mode in which the rotor side converter is operated to control an output voltage ($v_s$) at a stator of the wound rotor induction generator in accordance with a reference stator voltage ($v^*_s$), wherein operating the power converter in the grid forming operating mode comprises:

   based on the reference stator voltage ($v^*_s$) for the output stator voltage ($v_s$), deriving a reference rotor current ($i^*_{r,d}$, $i^*_{r,q}$) for a rotor current in the rotor; and
   controlling the rotor current ($i_{r,d}$, $i_{r,q}$) in the rotor in accordance with the reference rotor current ($i^*_{r,d}$, $i^*_{r,q}$).

2. The method according to claim 1, wherein the rotor current ($i_{r,d}$, $i_{r,q}$) is a three-phase rotor current, wherein the reference rotor current ($i^*_{r,d}$, $i^*_{r,q}$) for the three-phase rotor current is derived in a rotating d-q frame which rotates with a phase angle and which includes a d component ($i_{r,d}$) of the rotor current and a q component ($i_{r,q}$) of the rotor current, and wherein the rotor current is controlled by a rotor current controller ($c_1$, $c_2$) comprising a respective d component current controller ($c_1$) and a respective q component current controller ($c_2$), and wherein preferably at least one of the d-axis current controller and the q-axis current controller is a proportional-integral controller.

3. The method according to any of claims 1 or 2, wherein controlling the output stator voltage ($v_s$) comprises controlling an output stator voltage magnitude and/or controlling an output stator voltage phase.

4. The method according to any of the preceding claims, wherein operating the power converter in the grid forming operating mode further comprises:
   determining a phase angle ($\theta$) of the output stator voltage ($v_s$) based on a swing equation in response to a reference torque ($\tau^*$) and a monitored torque ($\tau$) or in response to a reference active power ($P^*$) and a monitored active power ($P$).

5. The method according to claim 4, wherein the swing equation is a second order differential equation, wherein the second order differential equation models an inertial response, and wherein preferably the second order differential equation is represented by an equation $d(d\theta/dt)/dt=1/(2H)(\tau^*-\tau-D(\omega_0-\omega))$ or $d(d\theta/dt)/dt=1/(2H)(P^*-P-D(\omega_0-\omega))$, wherein $\theta$ is the phase angle, H is an inertia coefficient, D is a damping coefficient, $\omega_0$ is a predetermined nominal frequency, $\omega$ is an electrical angular velocity, $\tau^*$ is the reference torque, $\tau$ is the monitored torque, $P^*$ is the reference active power, P is the monitored active power.

6. The method according to claim 4 or 5, wherein the method further comprises
   applying a reference frame transformation based on the determined phase angle ($\theta$), wherein preferably applying the reference frame transformation comprises at least one of transforming from the dq-frame into the abc-frame and transforming from the abc-frame into the dq-frame.

7. The method according to any of the preceding claims, wherein deriving the reference rotor current ($i^*_{r,d}$, $i^*_{r,q}$) from the reference stator voltage ($v^*_s$) comprises
   monitoring a stator current in stator windings of the stator (111) to generate a monitored stator current ($i_{s,d}$, $i_{s,q}$),
   deriving a reference flux ($\Psi^*_d$, $\Psi^*_q$) from the reference stator voltage ($v^*_s$),
   generating the reference rotor current ($i^*_{r,d}$, $i^*_{r,q}$) based on the reference flux and the monitored stator current.

8. The method according to claim 7, wherein, the reference flux ($\Psi^*_d$, $\Psi^*_q$) is a reference stator flux ($\Psi^*_{s,d}$, $\Psi^*_{s,q}$) and the reference rotor current ($i^*_{r,d}$, $i^*_{r,q}$) is generated from the reference stator flux ($\Psi^*_{s,d}$, $\psi^*_{s,q}$) by means of a stator flux rotor current equation set, wherein the stator flux rotor current equation set preferably comprises $i^*_{r,d}=(\Psi^*_{s,d}-L_s i_{s,d})/L_m$ and $i^*_{r,q}=(\Psi^*_{s,q}-L_s i_{s,q})/L_m$ wherein $i^*_{r,d}$ is the reference rotor current in d axis, $i^*_{r,q}$ is the reference rotor current in q axis, $\Psi^*_{s,d}$ is the reference stator flux in d axis, $\Psi^*_{s,q}$ is the reference stator flux in q axis, $i_{s,d}$ is the monitored stator current in d axis, $i_{s,q}$ is the monitored stator current in q axis, $L_m$ is a magnetizing inductance and $L_s$ is a stator inductance; or
   wherein the reference flux is a reference rotor flux ($\Psi^*_{r,d}$, $\Psi^*_{r,q}$) and the reference rotor current ($i^*_{r,d}$, $i^*_{r,q}$) is generated from the reference rotor flux ($\Psi^*_{r,d}$, $\Psi^*_{r,q}$) by means of a rotor flux rotor current equation set, wherein the rotor flux rotor current equation set preferably comprises $i^*_{r,d}=(\Psi^*_{r,d}-L_m i_{s,d})/L_r$ and $i^*_{r,q}=(\Psi^*_{r,q}-L_m i_{s,q})/L_r$, wherein $i^*_{r,d}$ is the reference rotor current in d axis, $i^*_{r,q}$ is the reference rotor current in q axis, $\Psi^*_{r,d}$ is the reference rotor flux in d axis, $\Psi^*_{r,q}$ is the reference rotor flux in q axis, $i_{s,d}$ is the monitored stator current in d axis, $i_{s,q}$ is the monitored stator current in q axis, $L_m$ is the magnetizing inductance and $L_r$ is a rotor inductance.

9. The method according to any of claims 7 or 8, wherein the reference flux ($\Psi^*_d$, $\Psi^*_q$) is a reference stator flux ($\Psi^*_{s,d}$, $\Psi^*_{s,q}$) and deriving the reference flux comprises:

   providing a reference reactive power ($Q^*$),
   monitoring a reactive power to generate a monitored reactive power ($Q$), and
   generating the reference stator flux ($\Psi^*_{s,d}$, $\Psi^*_{s,q}$) by a reactive power controller (c3) based on the reference reactive power and the monitored reactive power.

10. The method according to claim 9, wherein the reactive power controller (c3) is cascaded by a voltage control and providing the reference reactive power ($Q^*$) further comprises:

    providing the reference stator voltage ($v^*_s$),
    monitoring the output stator voltage to generate a monitored stator voltage ($v_s$), and
    generating the reference reactive power ($Q^*$) by a voltage controller (410) based on the reference stator voltage and the monitored stator voltage.

11. The method according to claim 7 or 8, wherein the reference flux ($\Psi^*_d$, $\Psi^*_q$) is a reference rotor flux ($\Psi^*_{r,d}$ $\Psi^*_{r,q}$) and providing the reference flux comprises:

    providing a reference equivalent synchronous generator voltage ($E^*_{eq}$), and
    generating the reference rotor flux based on the reference equivalent synchronous generator voltage, wherein preferably, generating the reference rotor flux is based on an equation $\Psi^*_{r,d} = E^*_{eq}/(\omega_g(L_m/L_r))$, wherein $\Psi^*_{r,d}$ is the reference rotor flux in d axis, $E^*_{eq}$ is the reference equivalent synchronous generator voltage, $\omega_g$ is a grid frequency, $L_m$ is a magnetizing inductance, and $L_r$ is a rotor inductance.

12. A control system (118) for controlling the operation of a power converter (125) comprising a rotor side converter (113) configured to be electrically coupled to a rotor (112) of a wound rotor induction generator (110), wherein the control system is configured to operate the power converter in a grid forming operating mode in which the rotor side converter is operated to control an output stator voltage ($v_s$) at a stator of the wound rotor induction generator in accordance with a reference stator voltage ($v^*_s$), wherein the control system is configured to perform the method according to any of claims 1-11.

13. A power generation system (100) comprising:

a wound rotor induction generator (110) comprising a rotor (112) and a stator (111), wherein the stator is configured to be electrically coupled to a power grid (120),
a power converter (125) comprising a rotor side converter (113) configured to be electrically coupled to the rotor (112) of the wound rotor induction generator (110), and
a control system (118) according to claim 12, wherein the control system is coupled to the power converter to control the operation of the power converter.

14. The power generation system (100) according to claim 13, wherein the power converter (125) further includes a grid side converter that is coupled to the rotor side converter, wherein the control system is configured to operate the grid side converter in a power grid following operation, wherein preferably the grid following operation includes vector control or inertia synchronization control.

15. A computer program for controlling the operation of a power converter (125) comprising a rotor side converter (113) configured to be electrically coupled to a rotor (112) of a wound rotor induction generator (110), wherein the computer program comprises control instructions which, when executed by a processing unit (116) of a control system (118) controlling the operation of the power converter, cause the processing unit to perform the method according to any of claims 1-11.

# FIG 1

# FIG 2

# FIG 3

# FIG 4

## FIG 5

205

$v^*{}_S$

510

$\omega_g$

$E^*{}_{eq}$

520

$\Psi^*{}_{r, d}$

$\Psi^*{}_{r, q}$

210

$i^*{}_{r, d}$

$i^*{}_{r, q}$

$i_{S, d}$

$i_{S, q}$

$\tau^* | P^*$   206

$\tau | P$

$\theta$

## FIG 6

$R_S$   610   $L_S$   $L_r$   $R_r$   620

$v_S$   $i_S$   $L_m$   $i_r$   $v_r$

## FIG 7

## FIG 8

800

| OPERATING A POWER CONVERTER IN A GRID FORMING OPERATING MODE. | ~S801 |

| OPERATING A ROTOR SIDE CONVERTER TO CONTROL AN OUTPUT VOLTAGE AT A STATOR OF A WOUND ROTOR INDUCTION GENERATOR IN ACCORDANCE WITH A REFERENCE STATOR VOLTAGE. | ~S802 |

| DERIVING, BASED ON THE REFERENCE STATOR VOLTAGE FOR THE OUTPUT STATOR VOLTAGE, A REFERENCE ROTOR CURRENT FOR A ROTOR CURRENT IN A ROTOR OF THE WOUND ROTOR INDUCTION GENERATOR. | ~S803 |

| CONTROLLING THE ROTOR CURRENT IN THE ROTOR IN ACCORDANCE WITH THE REFERENCE ROTOR CURRENT. | ~S804 |

# FIG 9

Europäisches
Patentamt

European
Patent Office

Office européen
des brevets

## EUROPEAN SEARCH REPORT

**Application Number**

EP 21 38 2530

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 102 999 675 B (SHANGHAI MUNICIPAL ELEC POWER ET AL.) 8 April 2015 (2015-04-08) * the whole document * | 1-15 | INV. H02P9/00 |
| X | CN 108 919 029 B (UNIV KUNMING SCIENCE & TECH) 25 September 2020 (2020-09-25) * the whole document * | 1-15 | |
| A | RAHIMI M ET AL: "Grid-fault ride-through analysis and control of wind turbines with doubly fed induction generators", ELECTRIC POWER SYSTEMS RESEARCH, ELSEVIER, AMSTERDAM, NL, vol. 80, no. 2, 1 February 2010 (2010-02-01), pages 184-195, XP026785720, ISSN: 0378-7796, DOI: 10.1016/J.EPSR.2009.08.019 [retrieved on 2009-10-02] * the whole document * | 1-15 | |

| TECHNICAL FIELDS SEARCHED (IPC) |
|---|
| H02P H02J |

The present search report has been drawn up for all claims

| Place of search | Date of completion of the search | Examiner |
|---|---|---|
| Munich | 3 December 2021 | Fraïssé, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 38 2530

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2021

| Patent document cited in search report | | Publication date | Patent family member(s) | Publication date |
|---|---|---|---|---|
| CN 102999675 | B | 08-04-2015 | NONE | |
| CN 108919029 | B | 25-09-2020 | NONE | |

EPO FORM P0459

For more details about this annex : see Official Journal of the European Patent Office, No. 12/82

# EP 4 106 179 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. WANG ; J. HU ; X. YUAN ; L. SUN.** On Inertial Dynamics of Virtual-Synchronous-Controlled DFIG-Based Wind Turbines. *IEEE Transactions on Energy Conversion,* December 2015, vol. 30 (4), 1691-1702

21